(19) Europäisches Patentamt
European Patent Office
Office européen des brevets

(11) EP 2 155 804 B1

(12) EUROPEAN PATENT SPECIFICATION

(45) Date of publication and mention of the grant of the patent:
**01.08.2018 Bulletin 2018/31**

(21) Application number: **08760803.0**

(22) Date of filing: **10.06.2008**

(51) Int Cl.:
***C08G 77/10*** (2006.01)
***C08L 83/04*** (2006.01)
***C08K 3/22*** (2006.01)
***C08G 77/06*** (2006.01)
***C08G 77/16*** (2006.01)
***C08G 77/00*** (2006.01)

(86) International application number:
**PCT/EP2008/057244**

(87) International publication number:
**WO 2008/152042 (18.12.2008 Gazette 2008/51)**

# (54) A METHOD FOR MAKING PHENYLALKYLSILOXANES

VERFAHREN ZUR HERSTELLUNG VON PHENYLALKYLSILOXANEN

PROCÉDÉ DE FABRICATION DE PHÉNYLALKYLSILOXANES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.06.2007 GB 0711313**

(43) Date of publication of application:
**24.02.2010 Bulletin 2010/08**

(73) Proprietor: **Dow Silicones Corporation**
**Midland, MI 48686-0994 (US)**

(72) Inventors:
- **GUBBELS, Frédéric**
**B-1476 Houtain-le-Val (BE)**
- **LOBRY, Stéphanie**
**F-59920 Quievrechain (FR)**
- **VAN STIPHOUDT, Anne-Marie**
**B-1300 Wavre (BE)**

(74) Representative: **Donlan, Andrew Michael et al**
**Dow Silicones UK Limited**
**Intellectual Property Departement**
**Cardiff Road**
**Barry, South Glamorgan CF63 2YL (GB)**

(56) References cited:
**WO-A-02/066586**
**GB-A- 2 249 552**
**US-A- 2 432 665**
**US-A- 2 482 276**
**US-A- 2 521 674**
**US-A- 2 883 366**

- **KLOSOWSKI JEROME M ET AL: "DURABILITY OF SILICONE SEALANTS", POLYMERIC MATERIALS SCIENCE AND ENGINEERING. PMSE PREPRINTS, AMERICAN CHEMICAL SOCIETY, US, vol. 56, 1 January 1987 (1987-01-01), pages 469-475, XP009501604, ISSN: 0743-0515**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 155 804 B1

## Description

The present invention relates to a method for making phenylalkylsiloxanes, in particular phenylmethylsiloxanes.

Phenylalkylsiloxanes, in particular phenylmethylsiloxanes, are known in the art as having low gas permeability, making them particularly suitable for use in sealants for sealing spaces against the ingress/egress of gasses. Hence, phenylmethylsiloxanes having viscosities of at least 10000 mPa.s at 25°C, more preferably viscosities of greater than 100000 mPa.s at 25°C are industrially highly desired polymers but have proven to be extremely difficult to manufacture other than in a copolymeric form. For example, UK patent publication 2249552 discloses the use of phenylmethylsiloxanes in sealant compositions for use in sealing multiple-pane insulating glass units, which units comprise a plurality of panes of glass containing a gas, for example argon, in an interior space sealed at the periphery. Satisfactory sealing of the units is necessary since egress of argon gas from an insulating glass unit can lead to implosion of the unit: in such extreme cases, the sealant exhibits gas selectivity towards argon, nitrogen and oxygen. In this application, all commonly used sealants, such as those based on polysulphide, polyurethane and siloxanes, show such selectivity. In the latter case, the process is emphasized by the extremely high gas permeability of the siloxane matrix. US2883366 relates to a method for the rearrangement and condensation or relatively low molecular weight organopolysiloxanes to form higher molecular weight organopolysiloxane oils, resins, gels and gums using quaternary phosphonium compounds as polymerisation catalysts.

Higher molecular weight (MW) phenylmethylsiloxanes copolymers are conventionally made by polymerisation of -OH terminated lower MW phenylmethylsiloxanes and a low MW -OH terminated dimethylsiloxane (MW of approximately 1100) in the presence of a catalyst, such as for example an alkali metal hydroxide, hydrogen chloride, dodecylbenzylsulphonic acid, or a phosphonitrile compound. In the absence of the low MW - OH terminated dimethylsiloxane, polymerisation to higher MW phenylmethylsiloxanes does not occur. Indeed, the absence of low MW -OH terminated dimethylsiloxane can actually result in a decrease in the viscosity of the phenylmethylsiloxane, indicative of the formation of low MW cyclic siloxanes. On the other hand, in the presence of the low MW -OH terminated dimethylsiloxane, dimethyl/phenylmethylsiloxane copolymers are formed, rather than pure phenylmethylsiloxanes.

A series of alternative methods to produce higher molecular weight (MW) phenylethylsiloxanes were described in US 2,432,665 using powdered alkaline catalysts, in most cases powdered sodium hydroxide. Whilst non-copolymers were prepared typically the processes utilised were not industrially practical due to the length of time required to obtain polymers of adequate size. In several examples the polymers obtained were too small (e.g. a viscosity of <100000 mPa.s at 25°C). However, when polymers of a suitable size were prepared the process required unacceptably long reaction times e.g. >100 hours. This very long batch polymerization is unpractical for industrial use. The recommended atomic ratio of Si to alkali metal is in the range of between 500:1 and 100:1. It is to be appreciated that it was the disclosures in US 2,432,665, and the like showing processes resulting in extended polymerisation reaction times or unacceptably small polymers which led the man skilled in the art to industrially prepare phenylalkyl siloxanes as copolymers rather than pure polymers.

The present invention seeks to provide an industrially practical method for making higher MW phenylalkylsiloxanes from lower MW phenylalkylsiloxanes in the absence of low MW -OH terminated dimethylsiloxane.

Thus, according to the present invention there is provided a method for making a higher MW phenylalkylsiloxane having an average number average MW in excess of 10,000 as measured by proton NMR, with all of the silicon atoms bonded to a phenyl group, from a lower MW OH terminated phenylalkylsiloxane having a number average MW of from 200 to 1000, as measured by proton NMR, by polymerisation of the lower MW phenylalkylsiloxane under vacuum in the presence of an aqueous alkaline solution containing one or more alkalis selected from the group of sodium hydroxide, potassium hydroxide, magnesium hydroxide, calcium hydroxide, rubidium hydroxide ammonium hydroxide, tetraalkylammonium hydroxide, tetraalkyl ammonium alkoxide and phosphonium hydroxides in an amount of from 50ppm or greater based upon the amount of lower MW phenylalkylsiloxane. The invention also provides a sealant composition comprising said higher MW phenylalkylsiloxane as recited in claim 10.

Unless otherwise indicated all references to molecular weight and/or MW shall be deemed to refer to the number average molecular weight of the oligomer/polymer concerned.

The inventors have found that this bulk polymerisation method requires no comonomers and no solvents and enables the production of high molecular weight polymers at significantly higher speeds than previously described.

As mentioned above, higher MW phenylmethylsiloxanes have been made by polymerisation of -OH terminated lower MW phenylmethylsiloxanes and a low MW -OH terminated dimethylsiloxane in the presence of an alkali, such as an alkali metal hydroxide. However, the amount of catalyst used in these conventional methods to make such copolymers is about an order of magnitude less than in the method of the present invention. Thus, in a conventional method the catalyst is typically present in an amount of less than 10ppm, normally less than 5ppm, compared to the 50ppm or greater which is used in the present invention.

Thus, in the method of the present invention, lower MW phenylalkylsiloxane is polymerised to make higher MW phenylalkylsiloxane. The alkyl substituents of the lower MW phenylalkylsiloxane preferably have from 1 to 6 carbon

atoms, i.e. are selected from methyl, ethyl, propyl, butyl and hexyl groups including structural isomers, and are most preferably methyl groups.

The lower MW phenylalkylsiloxane used in the present invention may have an average MW of from 200 to 1000, preferably from 400 to 800, more preferably from 600 to 800. A particularly preferred lower MW phenylalkylsiloxane is a phenylmethylsiloxane having an average MW of from 650 to 750, for example approximately 700.

Preferred lower MW phenylalkylsiloxanes for use in the present invention are linear but may have a small degree of branching, and are preferably -OH terminated.

The lower MW phenylalkylsiloxane is polymerised in the presence of an aqueous alkaline solution containing one or more alkalis selected from the group of sodium hydroxide, potassium hydroxide, magnesium hydroxide, calcium hydroxide, rubidium hydroxide ammonium hydroxide, tetraalkylammonium hydroxide, tetraalkyl ammonium alkoxide and phosphonium hydroxides in an amount of from 50ppm or greater based upon the amount of lower MW phenylalkylsiloxane. Preferably each alkyl group contained in the tetraalkylammonium hydroxide may be the same or is different and comprises from 1 to 6 carbon atoms, examples include cyclopentyl trimethyl ammonium hydroxide, tetra(m)ethyl ammonium hydroxide and hydroxyethyltrimethyl ammonium hydroxide tetraalkyl phosphonium hydroxides may include, for example, tetraethyl phosphonium hydroxide Preferably each alkyl group contained in the tetraalkylammonium hydroxide may be the same or is different and comprises from 1 to 6 carbon atoms and isopropyltrimethyl phosphonium hydroxide.

Contrary to the teaching of US2432665 the inventors have surprisingly found that dramatically larger polymers may be prepared over short reaction times. In particular the use of potassium hydroxide in a process in accordance with the present invention has provided an added advantage of an unexpected apparent two stage polymerisation reaction whereby initial polymerisation is slower than that of an equivalent monomer polymerised with sodium hydroxide but after a certain period of time there is a step change and the rate of increase in chain length increases significantly.

A vacuum, typically a dynamic vacuum, is utilised to remove water produced during the condensation reaction is recommended.

Furthermore the inventors have identified that the resulting polymer produced can be at least partially controlled by applying a vacuum for the initial period of the polymerisation reaction and then removing the vacuum prior to reaction completion. The vacuum is used to remove water or other condensation by-products during the reaction. As time progresses an increasing amount of water is made as a by product of the condensation reactions occurring. Extraction of the water or other condensation by-products by vacuum generally causes the polymerisation rate to increase. However, once the polymerisation process is fully functioning e.g. after 15 to 20 minutes removal of the vacuum results in a slow down of the reaction and in turn enables better control of the molecular weight (and viscosity) of the end product.

It is well known that there is a directly proportionate relationship between viscosity and molecular weight. After extensive research the inventors have identified the following relationship between molecular weight Mn and viscosity in mPa.s (cP) as follows:

$$\eta = 7.522 \cdot 10^{-3} \cdot Mn^{1.6477}$$

It has been found that this advantage is particularly suited with polymerisation processes catalysed by an aqueous potassium hydroxide solution as the vacuum can be removed immediately before the step change in the rate of increase of viscosity and this prevents the polymerisation process from going out of control and enables the production of a industrially applicable polymer in a timely manner, contrary to the teaching of the prior art.

The alkali is used in the present invention in an amount of at least 50ppm based upon the amount of lower MW phenylalkylsiloxane. Whilst there is no theoretical upper limit to the amount of catalyst which may be used in the method of the present invention, preferred amounts are in excess of 100ppm, more preferably 300ppm or greater. A range of 50ppm to 750ppm is particularly preferred.

The polymerisation reaction of the method of the present invention is preferably performed at a temperature of from 70 to 100°C, more preferably from 80 to 90°C.

The higher MW phenylalkylsiloxane which is made by the method of the present invention is substantially pure, i.e. substantially all of the silicon atoms are bonded to a phenyl group. Whilst the polymerisation reaction may be stopped at any time using an appropriate neutralising agent, for example an acid such as acetic acid, the higher MW phenylalkylsiloxane product preferably has a MW in excess of 10,000, for example in excess of 30,000.

The polymerisation of pure lower MW phenylalkylsiloxanes (oligomers) in total absence of dimethylsiloxane oligomers has the advantage of preventing the formation of traces of 2,6-cis-diphenylhexaalkylcyclotetrasiloxane, which can impair human fertility. As a result, polymers produced with the method of the present invention preferably have no measurable trace of this intermediate, allowing its use in applications in which the dialkyl/phenylalkyl siloxane copolymer would not be usable.

The higher MW phenylalkylsiloxane made by the method of the present invention is useful in sealants, particularly in sealants for insulating glass units (IGUs), due to its low gas permeability, a property which may also be useful in other

applications, such as conformal coatings and corrosion protection. The phenylalkylsiloxane can also be used in a variety of other applications, for example in applications where their resistance to high temperature is beneficial such as in hydraulic fluids, transformer fluids, fluids exposed to radiation, and lubricants. Due to the high refractive index of phenylmethylsiloxane fluids, these polymers can be used in formulating optical adhesives, sealants and coatings and encapsulants, for e.g. light emitting diodes (LEDs) lenses, solar cells and arrays. The composition is well suited for any application that requires an optically transmissive silicone material to encapsulate and protect an opto-electronic device. The materials act as an encapsulant for solar cell module or light emitting diodes or for use in other optical devices. It must have good adhesion to required substrates and good mechanical integrity.

In the solar application the encapsulant would of course be between the glass and the solar cell, in an LED it could be between the semiconductor chip and a lens/cover which could be glass or resin.

Due to their shiny appearance they can also be used for formulating lotions to be used in personal care products for hair and skin. Their properties are also useful for coatings to treat textiles and paper.

Preferred sealants containing the polymer in accordance with the present invention may be provided to the user in either one or multiple parts (in the latter case they are combined immediately prior to use). Typically such multiple part compositions can have any suitable combination providing that neither part is able to pre-cure prior to use until mixed. For example, polymer, and filler may be present in one part and crosslinker, adhesion promoter (when present) and catalyst may be in the second part. Preferred sealant compositions comprising a higher MW phenylalkylsiloxane made by the method of the present invention comprise 10 to 60% of OH-terminated phenylalkylsiloxane, preferably phenylmethylsiloxane, 0 to 40% of a plasticizer, such as a mineral oil or a phthalate, 0 to 10% of a rheological additive, 0 to 85% of an inorganic filler or a mixture of inorganic fillers such as calcium carbonate, silica, aluminum oxide, mica or kaolin, 0.1 to 10% of a crosslinker 0.01% to 5% of an adhesion promoter, and 0.01 to 5% of a catalyst based on tin, titanium, aluminum, zirconium, or bismuth.

Any suitable cross-linker may be used. It may be which has three silicon-bonded hydrolysable groups per molecule; the fourth group is suitably a non-hydrolysable silicon-bonded organic group. These silicon-bonded organic groups are suitably hydrocarbyl groups which are optionally substituted by halogen such as fluorine and chlorine. Examples of such fourth groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably however, the fourth silicon-bonded organic group is methyl or ethyl.

Specific examples of cross-linkers include alkyltrialkoxysilanes such as methyltrimethoxysilane (MTM) and methyltriethoxysilane, alkenyltrialkoxy silanes such as vinyltrimethoxysilane and vinyltriethoxysilane, isobutyltrimethoxysilane (iBTM). Other suitable silanes include ethyltrimethoxysilane, phenyltrimethoxysilane, alkoxytrioximosilane, alkenyltrioximosilane, 3,3,3-trifluoropropyltrimethoxysilane, methyltriacetoxysilane, vinyltriacetoxysilane, ethyl triacetoxysilane, di-butoxy diacetoxysilane, phenyl-tripropionoxysilane, methyltris(methylethylketoximo)silane, vinyl-tris-methylethylketoximo)silane, methyltris(isopropenoxy)silane, vinyltris(isopropenoxy)silane, ethylpolysilicate, n-propylorthosilicate, ethylorthosilicate, dimethyltetraacetoxydisiloxane,

The cross-linker may also comprise a disilaalkane of the formula:

$$(R^2O)_{3-a}\overset{\overset{\displaystyle R^1_a}{|}}{Si}-R^3-\overset{\overset{\displaystyle R^4_b}{|}}{Si}(OR^5)_{3-b}$$

where $R^1$ and $R^4$ are monovalent hydrocarbons, $R^2$ and $R^5$ are alkyl groups or alkoxylated alkyl groups, $R^3$ is a divalent hydrocarbon group and a and b are 0 or 1. Specific examples include 1,6-bis(trimethoxysilyl)hexane1,1-bis(trimethoxysilyl)ethane, 1,2-bis(trimethoxysilyl)ethane, 1,2-bis(trimethoxysilyl)propane, 1,1-bis(methyldimethoxysilyl)ethane, 1,2-bis(triethoxysilyl)ethane,1-trimethoxysilyl-2-methyldimethoxysilylethane, 1,3-bis(trimethoxyethoxysilyl)propane, and 1-dimethylmethoxysilyl-2-phenyldiethoxysilylethane.

Further alternative cross-linkers include Alkylalkenylbis(N-alkylacetamido) silanes such as methylvinyldi-(N-methylacetamido)silane, and methylvinyldi-(N-ethylacetamido)silane; dialkylbis(N-arylacetamido) silanes such as dimethyldi-(N-methylacetamido)silane; and dimethyldi-(N-ethylacetamido)silane; Alkylalkenylbis(N-arylacetamido) silanes such as methylvinyldi(N-phenylacetamido)silane and dialkylbis(N-arylacetamido) silanes such as dimethyldi-(N-phenylacetamido)silane. The cross-linker used may also comprise any combination of two or more of the above. A particularly preferred cross-linker is methyltrimethoxysilane.

The cross-linker used may also comprise any combination of two or more of the above.

Any suitable adhesion promoter(s) may be incorporated in a sealant composition in accordance with the present invention. These may include for example alkoxy silanes such as aminoalkylalkoxy silanes such as $\gamma$-aminopropyl tri-

ethoxysilane, epoxyalkylalkoxy silanes, for example, 3-glycidoxypropyltrimethoxysilane and, mercapto-alkylalkoxy silanes, reaction products of ethylenediamine with silylacrylates, Isocyanurates containing silicon groups such as 1,3,5-tris(trialkoxysilylalkyl) isocyanurates may additionally be used. Further suitable adhesion promoters are reaction products of epoxyalkylalkoxy silanes such as 3-glycidoxypropyltrimethoxysilane with amino-substituted alkoxysilanes such as 3-aminopropyltrimethoxysilane and optionally alkylalkoxy silanes such as methyltrimethoxysilane, and derivatives thereof. A particularly preferred adhesion promoter is ethylenediaminepropyltrimethoxysilane.

Any suitable condensation catalyst (d) may be utilised to cure the composition these include condensation catalysts including tin, lead, antimony, iron, cadmium, barium, manganese, zinc, chromium, cobalt, nickel, aluminium, gallium or germanium and zirconium. Examples include organic tin metal catalysts such as triethyltin tartrate, tin octoate, tin oleate, tin naphthate, butyltintri-2-ethylhexoate, tinbutyrate, carbomethoxyphenyl tin trisuberate, isobutyltintriceroate, and diorganotin salts especially diorganotin dicarboxylate compounds such as dibutyltin dilaurate, dimethyltin dibutyrate, dibutyltin dimethoxide, dibutyltin diacetate, dimethyltin bisneodecanoate Dibutyltin dibenzoate, stannous octoate, dimethyltin dineodeconoate, dibutyltin dioctoate of which dibutyltin dilaurate, dibutyltin diacetate are particularly preferred. Other examples include 2-ethylhexoates of iron, cobalt, manganese, lead and zinc may alternatively be used but titanate and/or zirconate based catalysts are preferred.

Silicone sealant compositions which contain oximosilanes or acetoxysilanes as cross-linkers (b) in condensation cure compositions, generally use a tin catalyst for curing, especially diorganotin dicarboxylate compounds such as dibutyltin dilaurate, dibutyltin diacetate, dimethyltin bisneodecanoate.

For compositions which include alkoxysilane cross linker compounds, the preferred curing catalysts are those where M is titanium or zirconium, i.e. where the catalyst comprises titanate or zirconate compounds. Titanate compounds are particularly preferred. Such titanates may comprise a compound according to the general formula $Ti[OR]_4$ where each R may be the same or different and represents a monovalent, primary, secondary or tertiary aliphatic hydrocarbon group which may be linear or branched containing from 1 to 10 carbon atoms. Optionally the titanate may contain partially unsaturated groups. However, preferred examples of R include but are not restricted to methyl, ethyl, propyl, isopropyl, butyl, tertiary butyl and a branched secondary alkyl group such as 2,4-dimethyl-3-pentyl. Preferably, when each R is the same, R is an unbranched secondary alkyl groups, branched secondary alkyl group or a tertiary alkyl group, in particular, tertiary butyl such as tetrabutyltitanate, tetraisopropyltitanate.

For the avoidance of doubt an unbranched secondary alkyl group is intended to mean a linear organic chain which does not have a subordinate chain containing one or more carbon atoms, i.e. an isopropyl group, whilst a branched secondary alkyl group has a subordinate chain of one or more carbon atoms such as 2,4-dimethyl-3-pentyl.

Any suitable chelated titanates or zirconates may be utilised. Preferably the chelate group used is a monoketoester such as acetylacetonate and alkylacetoacetonate giving chelated titanates such as, for example diisopropyl bis(acetylacetonyl)titanate, diisopropyl bis(ethylacetoacetonyl)titanate and diisopropoxytitanium Bis(Ethylacetoacetate). Examples of suitable catalysts are additionally described in EP1254192 and WO200149774 which are incorporated herein by reference.

The present invention will now be described in detail by way of the following Examples in which all viscosity measurements were taken at 25°C unless otherwise indicated.

## Comparative Example 1 - Polymerisation of lower MW phenylmethylsiloxane using dodecylbenzylsulfonic acid (DBSA) catalyst

1kg OH-terminated phenylmethylsiloxane (average MW 560) was loaded into an IKA mixer and heated up to 40°C and degassed. 50g DBSA catalyst was added and a vacuum applied.

No increase in the viscosity was observed over time. OH-terminated dimethylsiloxane fluid (average MW 1100) was added stepwise in an attempt to boost the reaction:

10.65g dimethylsiloxane fluid
+59.67g dimethylsiloxane fluid
+61.94g dimethylsiloxane fluid
+62.17g dimethylsiloxane fluid
+62.17g dimethylsiloxane fluid
+62.75g dimethylsiloxane fluid
+62.70g dimethylsiloxane fluid

No increase in the viscosity was observed after 2 hours.

## Comparative Example 2 - Polymerisation of lower MW phenylmethylsiloxane using phosphonitrile catalyst

1kg OH-terminated phenylmethylsiloxane (average MW 560, viscosity 1000 mPa.s (cP)) was loaded into an IKA mixer and heated up to 70°C. 0.033 g phosphonitrile catalyst (10 ppm active, 30% in dichloromethane) was added and a vacuum applied. No increase in the viscosity was observed.

After about 1h, increasing amounts of catalyst were added and the temperature was put up to 120°C in order to boost the reaction. Although the reactor was bubbling strongly and water was condensing on the reactor wall, no increase in the viscosity was observed. After 3h, the reaction was stopped and the Brookfield viscosity measured as 500 mPa.s (cP) for the reacted polymer, compared to an initial value of 1000 mPa.s (cP) for the pure OH-terminated phenylmethylsiloxane. This lowering of the viscosity suggests that cyclization rather than polymerization occurred.

## Comparative Example 3 - Polymerisation of lower MW phenylmethylsiloxane with dimethylsiloxane fluid using potassium hydroxide catalyst

1kg OH-terminated phenylmethylsiloxane (average MW 560) was loaded into an IKA mixer, heated to 90°C and degassed. 1.02g KOH (0.IN) was added and a vacuum applied. No increase in the viscosity was observed over time. 261g of OH-terminated dimethylsiloxane (average MW 1100) was added in an attempt to boost the reaction. The solution became milky but there was no increase in the viscosity observed. After 1h, 2g of KOH (0.IN) was added to further boost the reaction but there was no effect. Finally, a large amount of KOH was added to the system (6g, 1.0N) in a further attempt to boost the reaction. 10 minutes later the milky solution turned to a clear solution indicating coupling is occurring between the phenylmethylsiloxane and the dimethylsiloxane. 20 minutes later, intensive bubbling was observed and viscosity increased rapidly. The reaction was stopped 25 minutes later. The copolymer was removed from the reactor and the viscosity measured at 23°C was 500,000 mPa.s (cP).

## Polymerisation of lower mw phenylmethylsiloxane in the absence of dimethylsiloxane fluid using potassium hydroxide catalyst

### Example 1

1kg OH-terminated phenylmethylsiloxane (average MW 560) was loaded into an IKA mixer and heated up to 90°C and degassed. 6g KOH (1N) was added and a vacuum applied. 30 minutes later the viscosity was increasing rapidly and high bubbling was occurring. 10 minutes later the alkali catalyst was neutralized with 6g of acetic acid (1N). The viscosity measured at 23°C was 100,000 mPa.s (cP), and the molecular weight determined by proton NMR to about 30,000.

### Reference Example 2

1kg OH-terminated phenylmethylsiloxane (average MW 560) was loaded into an IKA mixer and heated up to 90°C and degassed. 5.42g KOH (1N) was added and a vacuum applied. 30 minutes later the viscosity was increasingly rapidly and high bubbling was occurring. The alkali catalyst was neutralised with 5.66g acetic acid. The viscosity measured at 23°C was 550,000 mPa.s (cP) immediately after the reaction, 728,000 mPa.s (cP) 1 day after the reaction, 1,136,000 mPa.s (cP) 20 days after the reaction, and 1,148,000 mPa.s (cP) 27 days after the reaction.

### Reference Example 3

1kg OH-terminated phenylmethylsiloxane (average MW 560) was loaded into an IKA mixer and heated up to 90°C and degassed. 4.22g KOH (1N) was added and a vacuum was applied. After 10 minutes bubbles started forming and the solution became milky. After a further 10 minutes 0.5g acetic acid was added, and after a further 14 minutes another 0.41g acetic acid was added. The viscosity measured at 23°C was 13,050 mPa.s (cP) immediately after the reaction, 52,200 mPa.s (cP) 1 day after the reaction, and 49,600 mPa.s (cP) 2 days after the reaction.

### Example 4

1kg OH-terminated phenylmethylsiloxane (average MW 560) was loaded into an IKA mixer and heated up to 90°C and degassed. After 10 minutes 4.74g KOH (1N) was added and a vacuum was applied, and within 5 minutes bubbles had started forming and the solution became milky. 15 minutes latter 0.5g acetic acid was added to the solution, followed by a further 0.41g 14 minutes later, and a further 1.06g 2 minutes later. The viscosity measured at 23°C was 37,300 mPa.s (cP) (average MW 23,200) immediately after the reaction, 189,200 mPa.s (cP) 20 days after the reaction,

and 208,800 mPa.s (cP) 26 days after the reaction.

## Example 5

1kg OH-terminated phenylmethylsiloxane (average MW 560) was loaded into an IKA mixer and heated up to 90°C and degassed. 1.02g KOH (1N) was added and a vacuum was applied, following which bubbles starting forming and within 2h 20 minutes the solution became milky. 20 minutes later 0.12g acetic acid was added to the solution, followed by a further 0.1g 20 minutes later. The viscosity measured at 23°C was 136,400 mPa.s (cP) (average MW 25,700) 1 day after the reaction, 189,200 mPa.s (cP) 20 days after the reaction, and 143,200 mPa.s (cP) 11 days after the reaction.

## Example 6

1kg OH-terminated phenylmethylsiloxane (average MW 560) was loaded into an IKA mixer and heated up to 90°C. 4.0g KOH (1N) was added and a vacuum was applied after 40 minutes, following which bubbles starting forming. 40 minutes later 1.34g of a 70/30 mixture of bis(trimethylsilyl)hydrogen phosphate and bis(trimethylsilyl) dihydrogen phosphate was added to the solution to neutralise the KOH. The viscosity measured at 23°C was 34,900 mPa.s (cP) (average MW 13,000) 1 day after the reaction, rising to 39,000 mPa.s (cP) 12 days after the reaction.

## Reference Example 7

3kg OH-terminated phenylmethylsiloxane (average MW 560) was loaded into a Molteni mixer and heated up to 90°C. Dynamic vacuum was then applied for 10 minutes on the reactor. 11.90 g of KOH (1N) was added in the reactor and a reduced pressure of 20 mm of Hg was applied on the stirred mixture for 25 minutes. Atmospheric pressure was then applied under stirring for another (a) 10; (b) 13, (c) 15, (d) 17 minutes. Then, 7.200 g of water diluted acetic acid (10wt%) was added and stirred for 10 minutes. A dynamic vacuum was then applied for 5 minutes and the reaction was then stopped. Polymers of viscosities of (a) 52,000 mPa.s (cP), (b) 74,000 mPa.s (cP), (c) 95,000 mPa.s (cP) and (d) 119,000 mPa.s (cP) were obtained respectively.

## Reference Example 8

The inventors have compared the reaction process catalysed by aqueous solutions of sodium hydroxide and potassium hydroxide. 1kg OH-terminated phenylmethylsiloxane (average MW 560) was loaded into an IKA mixer and heated up to 90°C and degassed for 10 minutes whilst stirring. The mentioned amount of a 1N solution of alkaline hydroxide was added. Vacuum was then applied and the viscosity was measured with respect to the time from the start of the reaction. The results are tabulated in Table 1 below.

**Table 1**

| Catalyst present (ppm) | Viscosity at Room temperature mPa.s (cP) | | | | | | | | | |
|---|---|---|---|---|---|---|---|---|---|---|
| | 0 | 5 mins | 10 mins | 15 mins | 20 mins | 25 mins | 30 mins | 35 mins | 40 mins | 45 mins |
| NaOH (100) | 1302 | 3475 | 4378 | 5083 | 6725 | 10749 | 16888 | 27260 | 42979 | 55357 |
| NaOH (200) | 968 | 2249 | 3490 | 5428 | 8995 | 14861 | 27892 | 41457 | 58770 | 79201 |
| NaOH (300) | 1302 | 3818 | 6261 | 10740 | 15963 | 27212 | 45194 | 67862 | 91789 | 116878 |
| KOH (100) | 1558 | 1845 | 2216 | 2942 | 2999 | 5361 | 6724 | 8342 | 13165 | 22898 |
| KOH (200) | 968 | 1337 | 1679 | 2480 | 2919 | 5827 | 13715 | 42750 | 134534 | 264178 |
| KOH (300) | 1426 | 1762 | 2213 | 5306 | 27133 | 112858 | 853021 | 2703394 | 4616056 | 6907127 |

It will be seen that initially the KOH results are not as good as sodium hydroxide catalysts but after an initial period a step change occurs and the viscosity in the systems utilizing KOH raise dramatically. As can be clearly seen in the graphical representation provided herewith as Fig. 1

**One-part sealant compositions comprising higher mw polyphenylmethylsiloxane made according to the present invention**

**Reference Example 9**

A one-part sealant composition was made as follows, the ingredients for which are given in Table 2 below. 100 parts of polymer, 24 parts of plasticizer and 3 parts of the rheological additive were added in a Neulinger mixer and stirred for 5 minutes. 128 parts of filler was added in two batches, following which a vacuum was applied for 5 minutes. 7 parts of crosslinker, 0.2 parts of adhesion promoter and 2.4 parts of catalyst were added and mixed for 5 minutes. Vacuum was applied for 5 minutes and the final paste was packaged in 310 ml cartridges.

**Table 2**

| | | |
|---|---|---|
| Polymer | Phenylmethylsiloxane (50,000 mPa.s (cP)) | 100 parts |
| Plasticizer | Santicizer® 261A | 24 parts |
| Rheological additive | Polyvest® EP-OS 800s | 3 parts |
| Filler | Precipitated calcium carbonate (Socal® 312N) | 128 parts |
| Crosslinker | Methyltrimethoxysilane | 7 parts |
| Adhesion promoter | Aminoethylaminopropyl-trimethoxysilane | 0.2 parts |
| Catalyst | Tyzor® DC diisopropoxy -bis(ethylacetoacetate)titanate in methyltrimethoxysilane(80/20) | 2.4 parts |

Santicizer® 261A is an alkyl (C7-C8-C9) benzyl phthalate available from Ferro Corporation
Socal® 312N is available from Solvay Chemicals
Tyzor® DC is available from DuPont

**Reference Example 10**

A one-part sealant composition was made as follows, the ingredients for which are given in Table 3 below. 100 parts of polymer, 48 parts of plasticizer and 4 parts of the rheological additive were added in a Neulinger mixer and stirred for 5 minutes. 200 parts of filler 1 and 40 parts of filler 2 were added in two batches, following which a vacuum was applied for 5 minutes. 4 parts of crosslinker, 2.8 parts of adhesion promoter and 1 part of catalyst were added and mixed for 5 minutes. Vacuum was applied for 5 minutes and the final paste was packaged in 310 ml cartridges.

**Table 3**

| | | |
|---|---|---|
| Polymer | Phenylmethylsiloxane (30,000 mPa.s (cP)) | 100 parts |
| Plasticizer | Methyl Oleate | 48 parts |
| Rheological additive | Polyvest®EP-OS 800s | 4 parts |
| Filler 1 | Precipitated calcium carbonate (Socal® 312N) | 200 parts |
| Filler 2 | Ground calcium carbonate BLR3 | 40 parts |
| Crosslinker | Vinyltrimethoxysilane | 4 parts |
| Adhesion promoter | Aminoethylaminopropyl-trimethoxysilane | 2.8 parts |
| Catalyst | Metatin® 740 (dibutylbis (2,4-pentanedionato) tin) | 2.4 parts |

BLR3 is available from Omya
Metatin® 740 is available from KMZ Chemicals Limited

**Two-part sealant compositions comprising higher mw polyphenylmethylsiloxane made according to the present invention**

All two part sealants were produced by mixing 10 parts of Part A with 1 part of Part B in a Semco® cartridge.

**Reference Example 11 - Part A**

Part A for use in a two-part sealant composition was made as follows, the ingredients for which are given in Table 4 below. 100 parts of polymer and 39 parts of plasticizer were added in a Neulinger mixer and stirred for 5 minutes. 45 parts of filler 1, 94 parts of filler 2, 12 parts of filler 3 and 8.5 parts of filler 4 were added in two batches, following which a vacuum was applied for 5 minutes. 0.9 parts of crosslinker was added and mixed for 5 minutes. Vacuum was applied for 5 minutes and the final paste was packaged in 170 ml cartridges.

**Table 4**

| | | |
|---|---|---|
| Polymer | Phenylmethylsiloxane (50,000 mPa.s (cP)) | 100 parts |
| Plasticizer | Santicizer® 261A | 39 parts |
| Rheological Additive | Polyvest EP-OS 800s | 4 parts |
| Filler 1 | Precipitated calcium carbonate (Socal® 312N) | 94 parts |
| Filler 2 | Ground calcium carbonate BLR3 | 12 parts |
| Filler 3 | Doucil 4A | 8.5 parts |
| Crosslinker | Methyltrimethoxysilane | 0.9 parts |

Doucil 4A is available from Ineos silica

**Reference Example 12 - Part A**

Part A for use in a two-part sealant composition was made as follows, the ingredients for which are given in Table 5 below. 100 parts of polymer and 39 parts of plasticizer were added in a Neulinger mixer and stirred for 5 minutes. 45 parts of filler 1, 94 parts of filler 2, 12 parts of filler 3 and 8.5 parts of filler 4 were added in two batches, following which a vacuum was applied for 5 minutes. 0.9 parts of crosslinker 1 and 12 parts of crosslinker 2 were added and mixed for 5 minutes. Vacuum was applied for 5 minutes and the final paste was packaged in 170 ml cartridges.

**Table 5**

| | | |
|---|---|---|
| Polymer | Phenylmethylsiloxane (50,000 mPa.s (cP)) | 100 parts |
| Plasticizer | Santicizer® 261A | 39 parts |
| Rheological Additive | Polyvest EP-OS 800s | 4 parts |
| Filler 1 | Precipitated calcium carbonate (Socal® 312N) | 94 parts |
| Filler 2 | Ground calcium carbonate BLR3 | 12 parts |
| Filler 3 | Doucil 4A | 8.5 parts |
| Crosslinker 1 | Methyltrimethoxysilane | 0.9 parts |
| Crosslinker 2 | Metatin® 740 (dibutylbis (2,4-pentanedionato) tin) | 15 parts |

**Reference Example 13 - Part B**

Part B for use in a two-part sealant composition was made as follows, the ingredients for which are given in Table 6 below. 100 parts of plasticizer was added to a dental mixer, following which 58 parts of filler 1 and 12 parts of filler 2 were added in two batches and mixed for 1 minute. 11 parts of crosslinker, 22 parts of adhesion promoter and 15 parts of catalyst were added and mixed for 1 minute.

**Table 6**

| | | |
|---|---|---|
| Plasticizer | Santicizer® 261A | 100 parts |
| Filler 1 | Precipitated calcium carbonate (Socal® 312N) | 58 parts |
| Filler 2 | Aerosil® R974 | 12 parts |
| Crosslinker | n-propylorthosilicate | 11 parts |
| Adhesion promoter | aminopropyl-triethoxysilane | 22 parts |
| Catalyst | Metatin® 740 (dibutylbis (2,4-pentanedionato) tin) | 15 parts |

Aerosil® R974 is a fumed silica available from Degussa

**Reference Example 14 - Part B**

Part B for use in a two-part sealant composition was made as follows, the ingredients for which are given in Table 7 below. 100 parts of plasticizer was added to a dental mixer, following which 100 parts of filler 1 and 18 parts of filler 2 were added in two batches and mixed for 1 minute. 17 parts of crosslinker, 3 parts of adhesion promoter and 93 parts of catalyst were added and mixed for 1 minute.

**Table 7**

| | | |
|---|---|---|
| Plasticizer | Santicizer® 261A | 100 parts |
| Filler 1 | Precipitated calcium carbonate (Socal® 312N) | 100 parts |
| Filler 2 | Aerosil® R974 | 18 parts |
| Crosslinker | n-propylorthosilicate | 17 parts |
| Adhesion promoter | aminopropyl-triethoxysilane | 3 parts |
| Catalyst | Tyzor® DC diisopropoxy -bis(ethylacetoacetate)titanate in methyl-trimethoxysilane(80/20) | 93 parts |

**Reference Example 15 Part A**

Part A for use in a two-part sealant composition was made as follows, the ingredients for which are given in Table 8 below. 100 parts of polymer and 20 parts of plasticizer were added in a Neulinger mixer and stirred for 5 minutes. 100 parts of filler 1, 110 parts of filler 2 were added in two batches, following which a vacuum was applied for 5 minutes. The final paste was packaged in 170 ml cartridges.

**Table 8**

| | | |
|---|---|---|
| Polymer | Phenylmethylsiloxane (119,000 mPa.s (cP)) | 100 parts |
| Plasticizer | Santicizer 278 | 20 parts |
| Filler 1 | Precipitated calcium carbonate (Socal7 312N) | 100 parts |
| Filler 2 | Ground calcium carbonate BLR3 | 110 parts |

Santicizer 278 is available from Ferro

**Reference Example 16 - Part B**

Part B for use in a two-part sealant composition was made as follows, the ingredients for which are given in Table 9 below. 100 parts of Crosslinker was added to a dental mixer, following which 12.5 parts of adhesion promoter and 50 parts of catalyst were added and mixed for 1 minute.

**Table 9**

| | | |
|---|---|---|
| Crosslinker | 1,6-bis(trimethoxysilyl)hexane | 100 parts |
| Adhesion promoter | aminopropyl-triethoxysilane | 12.5 parts |
| Catalyst | Metatin S26 | 50 parts |

1,6-bis(trimethoxysilyl)hexane is available from Dow Corning
Metatin S26 is available from Rohm and Haas.

## Claims

1. A method for making a higher MW phenylalkylsiloxane having an average number average MW in excess of 10,000 as measured by proton NMR, with all of the silicon atoms bonded to a phenyl group, from a lower MW OH terminated phenylalkylsiloxane having a number average MW of from 200 to 1000, as measured by proton NMR, by polymerisation of the lower MW phenylalkylsiloxane under vacuum in the presence of an aqueous alkaline solution containing one or more alkalis selected from the group of sodium hydroxide, potassium hydroxide, magnesium hydroxide, calcium hydroxide, rubidium hydroxide ammonium hydroxide, tetraalkylammonium hydroxide, tetraalkyl ammonium alkoxide and phosphonium hydroxides in an amount of from 50ppm or greater based upon the amount of lower MW phenylalkylsiloxane.

2. A method according to claim 1 **characterised in that** the alkyl substituents of the lower MW phenylalkylsiloxane have from 1 to 6 carbon atoms.

3. A method according to any preceding claim **characterised in that** the lower MW phenylalkylsiloxane is linear.

4. A method according to any preceding claim **characterised in that** the alkali is selected from alkali metal compounds.

5. A method according to claim 4 **characterised in that** the alkali metal compounds are alkali metal hydroxides.

6. A method according to any one of claims 1 to 5 **characterised in that** the method proceeds initially under vacuum and subsequently prior to stopping the polymerisation is conducted for a period at around atmospheric pressure.

7. A method according to any preceding claim **characterised in that** the polymerisation reaction is stopped using a neutralising agent.

8. A method according to claim 7 **characterised in that** neutralising agent comprises acetic acid or a silylphosphate.

9. A method according to any preceding claim **characterised in that** the higher MW phenylalkylsiloxane has an average MW in excess of 30,000.

10. A sealant composition comprising 10 to 60 wt% of a higher MW phenylalkylsiloxane made according to any preceding claim, 0 to 40% of a plasticizer, 0 to 10% of a rheological additive, 0 to 85% of an inorganic filler or a mixture of inorganic fillers, 0.1 to 10% of a crosslinker selected from methyltrimethoxysilane (MTM), methyltriethoxysilane, alkenyltrialkoxy silanes, isobutyltrimethoxysilane (iBTM), ethyltrimethoxysilane, vinyltriethoxysilane, phenyltrimethoxysilane, alkoxytrioximosilane, alkenyltrioximosilane, 3,3,3-trifluoropropyltrimethoxysilane, methyltriacetoxysilane, vinyltriacetoxysilane, ethyl triacetoxysilane, di-butoxy diacetoxysilane, phenyl-tripropionoxysilane, methyltris(methylethylketoximo)silane, vinyl-tris-methylethylketoximo)silane, methyltris(isopropenoxy)silane, vinyltris(isopropenoxy)silane, ethylpolysilicate, n-propylorthosilicate, ethylorthosilicate, dimethyltetraacetoxydisiloxane, and a disilaalkane of the formula:

$$\begin{array}{c} R^1_a \quad\quad R^4_b \\ | \quad\quad\quad | \\ (R^2O)_{3-a}Si\text{-}R^3\text{-}Si(OR^5)_{3-b} \end{array}$$

where $R^1$ and $R^4$ are monovalent hydrocarbons, $R^2$ and $R^5$ are alkyl groups or alkoxylated alkyl groups, $R^3$ is a divalent hydrocarbon group and a and b are 0 or 1, 0.01% to 5% of an adhesion promoter selected from aminoalkylalkoxy silanes, epoxyalkylalkoxy silanes and mercapto-alkylalkoxy silanes, reaction products of ethylenediamine with silylacrylates, Isocyanurates containing silicon groups, and reaction products of epoxyalkylalkoxy silanes with amino-substituted alkoxysilanes and optionally alkylalkoxy silanes, and 0.01 to 5% of a catalyst.

**11.** A sealant composition according to claim 10 comprising a plasticiser selected from a mineral oil and a phthalate, and/or an inorganic filler selected from calcium carbonate, silica, aluminum oxide, mica and kaolin.

**12.** A sealant composition according to claim 10 or 11 **characterised in that** the crosslinker is methyltrimethoxysilane (MTM), methyltriethoxysilane, isobutyltrimethoxysilane (iBTM), ethyltrimethoxysilane, or a disilaalkane and/or the adhesion promoter is ethylenediaminepropyltrimethoxysilane and/or the catalyst comprises a tin, titanium, aluminum, zirconium, or bismuth compound.

**13.** An insulating glass unit comprising a sealant according to any one of claims 10 to 12.

**14.** A two part sealant comprising the composition in accordance with any one of claims 10 to 12.

## Patentansprüche

**1.** Verfahren zum Herstellen eines Phenylalkylsiloxans mit höherem MW mit einem zahlenmittleren durchschnittlichen MW von mehr als 10.000, gemessen durch Protonen-NMR, wobei alle Siliciumatome an eine Phenylgruppe gebunden sind, aus einem OH-terminierten Phenylalkylsiloxan mit einem niedrigeren MW mit einem zahlenmittleren durchschnittlichen MW von 200 bis 1.000, gemessen durch Protonen-NMR, durch Polymerisation des Phenylalkylsiloxans mit niedrigerem MW unter Unterdruck in der Gegenwart einer wässrigen Alkalilösung, die ein oder mehrere Alkali enthält, ausgewählt aus der Gruppe aus Natriumhydroxid, Kaliumhydroxid, Magnesiumhydroxid, Calciumhydroxid, Rubidiumhydroxid, Ammoniumhydroxid, Tetraalkylammoniumhydroxid, Tetraalkylammoniumalkoxid und Phosphoniumhydroxiden in einer Menge von mindestens 50 ppm, basierend auf der Menge des Phenylalkylsiloxans mit niedrigerem MW.

**2.** Verfahren nach Anspruch 1, **dadurch gekennzeichnet, dass** die Alkylsubstituenten des Phenylalkylsiloxans mit niedrigerem MW 1 bis 6 Kohlenstoffatome aufweisen.

**3.** Verfahren nach einem der vorhergehenden Ansprüche, **dadurch gekennzeichnet, dass** das Phenylalkylsiloxan mit niedrigerem MW linear ist.

**4.** Verfahren nach einem der vorhergehenden Ansprüche, **dadurch gekennzeichnet, dass** das Alkali aus Alkalimetallverbindungen ausgewählt ist.

**5.** Verfahren nach Anspruch 4, **dadurch gekennzeichnet, dass** die Alkalimetallverbindungen Alkalimetallhydroxide sind.

**6.** Verfahren nach einem der Ansprüche 1 bis 5, **dadurch gekennzeichnet, dass** das Verfahren anfangs unter Unterdruck verläuft und nachfolgend vor dem Beenden der Polymerisation für einen Zeitraum bei etwa Umgebungsdruck durchgeführt wird.

**7.** Verfahren nach einem der vorhergehenden Ansprüche, **dadurch gekennzeichnet, dass** die Polymerisationsreaktion unter Verwendung eines Neutralisationsmittels beendet wird.

**8.** Verfahren nach Anspruch 7, **dadurch gekennzeichnet, dass** das Neutralisationsmittel Essigsäure oder ein Silylphosphat umfasst.

**9.** Verfahren nach einem der vorhergehenden Ansprüche, **dadurch gekennzeichnet, dass** das Phenylalkylsiloxan mit höherem MW ein durchschnittliches MW von mehr als 30.000 aufweist.

**10.** Dichtungsmittelzusammensetzung, Folgendes umfassend: 10 bis 60 Gew.-% eines Phenylalkylsiloxans mit höherem MW, hergestellt nach einem der vorhergehenden Ansprüche, 0 bis 40 Gew.-% eines Weichmachers, 0 bis 10 Gew.-

% eines rheologischen Zusatzstoffes, 0 bis 85 Gew.-% eines anorganischen Füllstoffes oder einer Mischung aus anorganischen Füllstoffen, 0,1 bis 10 Gew.-% eines Vernetzers, ausgewählt aus Methyltrimethoxysilan (MTM), Methyltriethoxysilan, Alkenyltrialkoxysilanen, Isobutyltrimethoxysilan (iBTM), Ethyltrimethoxysilan, Vinyltriethoxysilan, Phenyltrimethoxysilan, Alkoxytrioximosilan, Alkenyltrioximosilan, 3,3,3-Trifluorpropyltrimethoxysilan, Methyltriacetoxysilan, Vinyltriacetoxysilan, Ethyltriacetoxysilan, Dibutoxydiacetoxysilan, Phenyltripropionoxysilan, Methyltris(methylethylketoximo)silan, Vinyltrismethylethylketoximo)silan, Methyltris(isopropenoxy)silan, Vinyltris(isopropenoxy)silan, Ethylpolysilicat, n-Propylorthosilicat, Ethylorthosilicat, Dimethyltetraacetoxydisiloxan und einem Disilaalkan mit der Formel:

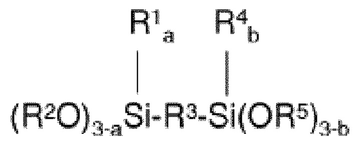

wobei $R^1$ und $R^4$ einwertige Kohlenwasserstoffe sind, $R^2$ und $R^5$ Alkylgruppen oder alkoxylierte Alkylgruppen sind, $R^3$ eine zweiwertige Kohlenwasserstoffgruppe ist und a und b 0 oder 1 sind, 0,01 % bis 5 % eines Haftvermittlers ausgewählt sind aus Aminoalkylalkoxysilanen, Epoxyalkylalkoxysilanen und Mercaptoalkylalkoxysilanen, Reaktionsprodukten eines Ethylendiamins mit Silylacrylaten, Isocyanuraten, die Siliciumgruppen enthalten, und Reaktionsprodukten von Epoxyalkylalkoxysilanen mit amino-substituierten Alkoxysilanen und optional Alkylalkoxysilanen, und 0,01 bis 5 % eines Katalysators.

**11.** Dichtungsmittelzusammensetzung nach Anspruch 10, Folgendes umfassend: einen Weichmacher, ausgewählt aus einem Mineralöl und einem Phthalat, und/oder einen anorganischen Füllstoff, ausgewählt aus Calciumcarbonat, Siliciumdioxid, Aluminiumoxid, Mica, und Kaolin.

**12.** Dichtungsmittelzusammensetzung nach Anspruch 10 oder 11, **dadurch gekennzeichnet, dass** der Vernetzer Folgendes ist: Methyltrimethoxysilan (MTM), Methyltriethoxysilan, Isobutyltrimethoxysilan (iBTM), Ethyltrimethoxysilan oder ein Disilaalkan und/oder der Haftvermittler Folgendes ist: Ethylendiaminpropyltrimethoxysilan und/oder der Katalysator Folgendes umfasst: eine Zinn-, eine Titan-, eine Aluminium-, eine Zirconium- oder eine Bismutverbindung.

**13.** Mehrscheiben-Isolierglas, umfassend einen Dichtungsstoff nach einem der Ansprüche 10 bis 12.

**14.** Zweikomponentendichtungsstoff, umfassend die Zusammensetzung nach einem der Ansprüche 10 bis 12.

**Revendications**

**1.** Procédé de fabrication de phénylalkylsiloxane de poids moléculaire supérieur ayant une masse moléculaire moyenne en nombre supérieure à 10 000 telle que mesurée par RMN du proton, tous les atomes de silicium étant liés à un groupe phényle, à partir d'un phénylalkylsiloxane à terminaison OH de masse moléculaire inférieure ayant une masse moléculaire moyenne en nombre de 200 à 1 000, telle que mesurée par RMN du proton, par polymérisation du phénylalkylsiloxane de masse moléculaire inférieure sous vide en présence d'une solution alcaline aqueuse contenant un ou plusieurs alcalins choisis dans le groupe d'hydroxyde de sodium, d'hydroxyde de potassium, d'hydroxyde de magnésium, d'hydroxyde de calcium, d'hydroxyde de rubidium, d'hydroxyde d'ammonium, d'hydroxyde de tétraalkylammonium, d'alcoxyde de tétraalkylammonium et d'hydroxydes de phosphonium dans une quantité supérieure ou égale à 50 ppm selon la quantité de phénylalkylsiloxane de masse moléculaire inférieure.

**2.** Procédé selon la revendication 1 **caractérisé en ce que** les substituants alkyle du phénylalkylsiloxane de masse moléculaire inférieure ont de 1 à 6 atomes de carbone.

**3.** Procédé selon l'une quelconque des revendications précédentes **caractérisé en ce que** le phénylalkylsiloxane de masse moléculaire inférieure est linéaire.

**4.** Procédé selon l'une quelconque des revendications précédentes **caractérisé en ce que** l'alcalin est choisi parmi des composés de métaux alcalins.

5. Procédé selon la revendication 4 **caractérisé en ce que** les composés de métaux alcalins sont des hydroxydes de métaux alcalins.

6. Procédé selon l'une quelconque des revendications 1 à 5 **caractérisé en ce que** le procédé est exécuté initialement sous vide puis, avant l'arrêt de la polymérisation, est exécuté pendant une période autour de la pression atmosphérique.

7. Procédé selon l'une quelconque des revendications précédentes **caractérisé en ce que** la réaction de polymérisation est arrêtée en utilisant un agent de neutralisation.

8. Procédé selon la revendication 7 **caractérisé en ce que** l'agent de neutralisation comprend de l'acide acétique ou un silylphosphate.

9. Procédé selon l'une quelconque des revendications précédentes **caractérisé en ce que** le phénylalkylsiloxane de masse moléculaire supérieure a une masse moléculaire moyenne supérieure à 30 000.

10. Composition d'étanchéité comprenant de 10 à 60 % en poids d'un phénylalkylsiloxane de masse moléculaire supérieure fabriqué selon l'une quelconque des revendications précédentes, de 0 à 40 % d'un plastifiant, de 0 à 10 % d'un additif rhéologique, de 0 à 85 % d'une charge minérale ou d'un mélange de charges minérales, de 0,1 à 10 % d'un agent de réticulation choisi parmi le méthyltriméthoxysilane (MTM), le méthyltriéthoxysilane, les alcényltrialcoxysilanes, l'isobutyltriméthoxysilane (iBTM), l'éthyltriméthoxysilane, le vinyltriéthoxysilane, le phényltriméthoxysilane, l'alcoxytrioximosilane, l'alcényltrioximosilane, le 3,3,3-trifluoropropyltriméthoxysilane, le méthyltriacétoxysilane, le vinyltriacétoxysilane, l'éthyltriacétoxysilane, le di-butoxydiacétoxysilane, le phényl-tripropionoxysilane, le méthyltris(méthyléthylcétoximo)silane, le vinyl-tris-méthyléthylcétoximo)silane, le méthyltris(isopropénoxy)silane, le vinyltris(isopropénoxy)silane, l'éthylpolysilicate, le n-propylorthosilicate, l'éthylorthosilicate, le diméthyltétraacétoxydisiloxane et un disilaalcane de la formule :

$$\begin{array}{ccc} & R^1_a & R^4_b \\ & | & | \\ (R^2O)_{3-a} & Si\text{-}R^3\text{-} & Si(OR^5)_{3-b} \end{array}$$

dans laquelle $R^1$ et $R^4$ sont des hydrocarbures monovalents, $R^2$ et $R^5$ sont des groupes alkyle ou des groupes alkyle alcoxylés, $R^3$ est un groupe hydrocarbure divalent et a et b sont 0 ou 1, de 0,01 % à 5 % d'un promoteur d'adhérence choisi parmi des aminoalkylalcoxysilanes, des époxyalkylalcoxysilanes et des mercapto-alkylalcoxysilanes, des produits de réaction d'éthylènediamine avec des silylacrylates, des isocyanurates contenant des groupes silicium, et des produits de réaction d'époxyalkylalcoxysilanes avec des alcoxysilanes amino-substitués et éventuellement des alkylalcoxysilanes et de 0,01 à 5 % d'un catalyseur.

11. Composition d'étanchéité selon la revendication 10 comprenant un plastifiant choisi parmi une huile minérale et un phtalate, et/ou une charge minérale choisie parmi le carbonate de calcium, la silice, l'oxyde d'aluminium, le mica et le kaolin.

12. Composition d'étanchéité selon la revendication 10 ou 11 **caractérisée en ce que** l'agent de réticulation est du méthyltriméthoxysilane (MTM), du méthyltriéthoxysilane, de l'isobutyltriméthoxysilane (iBTM), de l'éthyltriméthoxysilane ou un disilaalcane et/ou le promoteur d'adhérence est l'éthylènediaminepropyltriméthoxysilane et/ou le catalyseur comprend un composé d'étain, de titane, d'aluminium, de zirconium ou de bismuth.

13. Unité de verre isolant comprenant un produit d'étanchéité selon l'une quelconque des revendications 10 à 12.

14. Produit d'étanchéité en deux parties comprenant la composition selon l'une quelconque des revendications 10 à 12.

Fig. 1

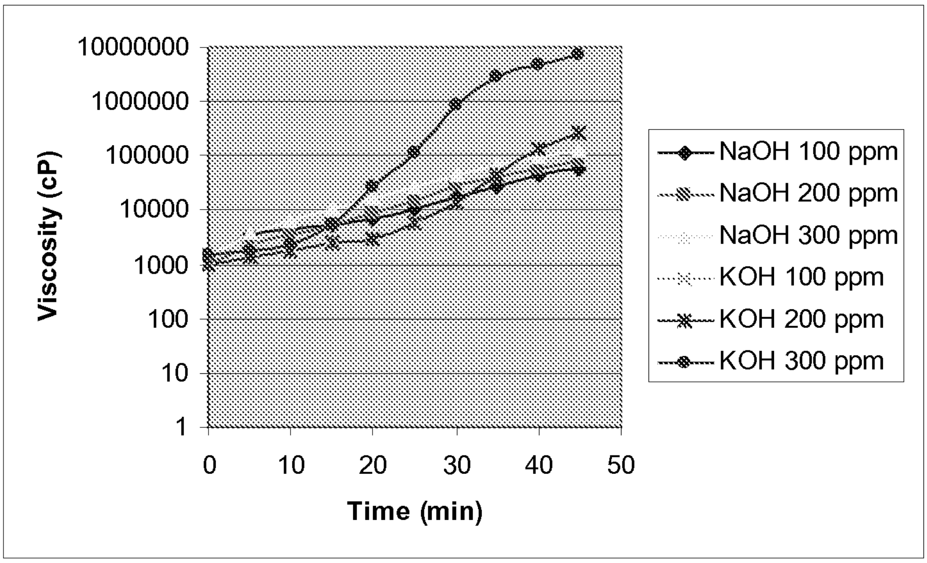
10000000
1000000
100000
10000
1000
100
10
1
Viscosity (cP)
0
10
20
30
40
50
Time (min)
NaOH 100 ppm
NaOH 200 ppm
NaOH 300 ppm
KOH 100 ppm
KOH 200 ppm
KOH 300 ppm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2249552 A
- US 2883366 A
- US 2432665 A
- EP 1254192 A
- WO 200149774 A